# EUROPÄISCHE PATENTSCHRIFT

(11) **EP 1 719 048 B1**
(45) Veröffentlichungstag und Bekanntmachung des Hinweises auf die Patenterteilung: **11.06.2008**
(21) Anmeldenummer: 05706769.6
(22) Anmeldetag: 21.02.2005
(51) Int. Cl.: G06F 3/14

(54) **DATENNETZANSCHLUSSGERÄT UND VERFAHREN FÜR EIN ANZEIGEGERÄT ZUR AUFBEREITUNG VON AUS EINEM DATENNETZ GELADENEN DATEN**
DATA NETWORK CONNECTION DEVICE AND METHOD FOR A DISPLAY DEVICE WHICH IS USED TO PREPARE DATA LOADED FROM A DATA NETWORK
APPAREIL DE CONNEXION A UN RESEAU DE DONNEES ET PROCEDE DESTINE A UN AFFICHEUR POUR PREPARER DES DONNEES CHARGEES A PARTIR D'UN RESEAU DE DONNEES

(30) Priorität: 19.02.2004 DE 102004008248
(43) Veröffentlichungstag der Anmeldung: 08.11.2006
(73) Patentinhaber: Fujitsu Siemens Computers GmbH, 80807 München (DE)
(72) Erfinder: KLEINE, Joachim, 86159 Augsburg (DE); WURZEL, Frank, 86156 Augsburg (DE)
(74) Vertreter: Epping - Hermann - Fischer
(86) Internationale Anmeldenummer: PCT/DE2005/000293
(87) Internationale Veröffentlichungsnummer: WO 2005/081098

(56) Entgegenhaltungen:
- EP-A- 0 455 437
- US-A- 5 805 148
- US-B1- 6 853 385
- PATENT ABSTRACTS OF JAPAN Bd. 1997, Nr. 05, 30. Mai 1997 (1997-05-30) -& JP 09 022338 A (TOSHIBA CORP), 21. Januar 1997 (1997-01-21)

## Beschreibung

Die Erfindung betrifft ein Datennetzanschlußgerät für ein Anzeigegerät mit einer einen Eingang aufweisenden Schnittstellenvorrichtung zur Herstellung einer Kommunikationsverbindung mit einem Datennetz, einem Ausgang zum Anschluß eines Anzeigegeräts, eine Ladeeinrichtung zum Laden anzuzeigender Daten aus dem Datennetz in einen Speicher und einer Anzeigeeinrichtung zur Umwandlung der geladenen Daten in ein Ausgangssignal zur Ansteuerung des Anzeigegeräts. Außerdem betrifft die Erfindung ein Verfahren, das in einem derartigen Datennetzanschlußgerät zur Anwendung kommen kann zur Aufbereitung der anzuzeigenden Daten.

Datennetzanschlußgeräte der beschriebenen Art werden eingesetzt, um beispielsweise einen Fernseher nicht nur für den Empfang von Fernsehkanälen einsetzen zu können, sondern auch zum Anzeigen von Informationen aus einem Datennetz, beispielsweise dem Internet. Die durch Datennetzanschlußgeräte zu bewältigende Aufgabe liegt darin, einerseits eine Kommunikationsverbindung zum Datennetz aufzubauen und gewünschte Daten aus dem Datennetz zu besorgen und andererseits die aus dem Datennetz empfangenen Daten so aufzubereiten, daß sie auf dem Fernseher in einer geeigneten Weise dargestellt werden.

Genau darin liegt ein großes Problem, denn die Auflösung eines Fernsehers mit typischerweise 720 x 576 Bildpunkten ist nicht geeignet, beispielsweise übliche HTML-Seiten aus dem Internet darzustellen, da diese in der Regel auf Computermonitore abgestimmt sind und eine Breite von mindestens 800 Bildpunkten aufweisen. Die Höhe der Seiten ist meist wesentlich größer als die darstellbaren 576 Bildpunkte eines Fernsehers. Dies rührt daher, daß die HTML-Seiten für die Anzeige auf Computermonitoren entwickelt werden. Diese besitzen eine horizontale Auflösung, die meistens 800, 1024 oder 1280 Bildpunkte beträgt. Die Seiten weisen eine je nach Inhalt beliebige vertikale Ausdehnung auf, die oft wesentlich größer ist als die vertikale Auflösung des Bildschirms. Um alle Bereiche einer Seite anzeigen zu können, werden sogenannte Scroll-Balken eingesetzt, die am unteren und rechten Bildschirmrand eingeblendet sind. Durch Verschieben der Balken kann der angezeigte Bildausschnitt verschoben werden. Dieses Verschieben ist verhältnismäßig komfortabel, da die Balken durch einen Mauszeiger bedient werden können.

Bei einem Fernseher ist jedoch meist keine Maus vorhanden, durch die in einfacher Weise die Scroll-Balken bedient werden können.

Es ist jedoch möglich, die Scroll-Balken wegzulassen und statt dessen ein Scrollen des Bildschirminhalts zu veranlassen, wenn der Mauszeiger an einen der Bildschirmränder geführt wird. Da der auf einem Fernseher darstellbare Bildschirminhalt kleiner ist als die typischen HTML-Seiten, sind sehr viele Scroll-Vorgänge notwendig. Außerdem kommt es häufig vor, daß ein Benutzer unbeabsichtigt in die Nähe einer der Ränder der Bildschirmseite gelangt und dadurch ein Scroll-Vorgang ausgelöst wird, der so nicht beabsichtigt war.

Nach dem Scrollen des Bildschirminhaltes muß der anzuzeigende Bildschirminhalt neu berechnet werden, was je nach Art der darzustellenden Informationen sehr rechenaufwendig ist und daher verhältnismäßig viel Zeit benötigt. Für den Benutzer bedeutet dies, daß er jedes Mal warten muß, bis der Bildschirminhalt neu berechnet und aufgebaut ist. Beim Scrollen ergibt sich ein ruckelndes Erscheinungsbild, was meist als sehr störend empfunden wird. Dies wird meist als sehr störend empfunden.

Aufgabe der Erfindung ist es, ein Datennetzanschlußgerät für ein Anzeigegerät sowie ein geeignetes Verfahren anzugeben, bei dem die Anzeige von Daten aus einem Datennetz auf einem Anzeigegerät verbessert ist, d. h. insbesondere mit weniger Rechenaufwand durchführbar ist.

Die Aufgabe wird erfindungsgemäß durch ein Datennetzanschlußgerät der eingangs genannten Art gelöst, das dadurch gekennzeichnet ist, daß die Anzeigeeinrichtung eine Bilderzeugungseinrichtung aufweist zur Erzeugung einer graphischen Darstellung der anzuzeigenden Daten unabhängig von der Auflösung eines angeschlossenen Anzeigegeräts und zum Ablegen der graphischen Darstellung in einem Graphikspeicher und eine Ausgabeeinrichtung aufweist zur Ausgabe einer Ausschnitts der graphischen Darstellung aus dem Graphikspeicher, die Mittel umfaßt zur Auswahl des auszugebenden Ausschnitts.

Der Vorteil des erfindungsgemäßen Datennetzanschlußgeräts besteht darin, daß die graphische Darstellung der anzuzeigenden Daten nur einmal berechnet werden muß, unabhängig davon, ob der Bildschirminhalt gescrollt wird. Ein Scrollen erfolgt erfindungsgemäß dadurch, daß ein Ausschnitt der in dem Graphikspeicher abgelegten graphischen Darstellung der anzuzeigenden Daten ausgewählt und ausgegeben wird. Die graphische Darstellung des anzuzeigenden Ausschnitts muß nicht neu berechnet werden, sondern kann direkt aus dem Graphikspeicher entnommen werden. Die Auswahl des anzuzeigenden Bildausschnitts erfolgt also einfach dadurch, daß ein bestimmter Speicherbereich des Graphikspeichers ausgelesen und angezeigt wird.

Die Größe des auszugebenden Ausschnitts kann von einem Benutzer vorbestimmt werden, wobei vorteilhafterweise eine Anpassung an die Auflösung des in Verbindung mit dem Datennetzanschlußgerät verwendeten Anzeigegeräts erfolgt.

Besonders vorteilhaft ist, daß auch solche Daten angezeigt werden können, die einerseits aus innerhalb einer bestimmten Zeitspanne statischen Daten und andererseits aus schnell veränderlichen Daten wie bewegten Bildern bestehen. Dazu werden in einer bevorzugten Ausführung zwei Ebenen in dem Graphikspeicher eingesetzt, wobei in einer ersten Ebene statische Daten und in einer zweiten Ebene die bewegten Bilder gespeichert werden. Während die Daten in der ersten Ebene nicht verändert werden müssen, ändern sich die Daten in der zweiten Ebene. Bei der Auswahl eines anzuzeigenden Ausschnitts ist nur die erste Ebene betroffen, sofern sich der Ausschnitt außerhalb des Bereichs befindet, in dem die bewegten Bilder ablaufen sollen. Vor der Ausgabe werden die in der ersten und in der zweiten Ebene abgespeicherten Daten entsprechend dem ausgewählten Ausschnitt gemischt.

In einer vorteilhaften Ausgestaltung der Erfindung ist ein Teil eines ausgewählten Ausschnitts vergrößert darstellbar. Dazu kann eine hardware-implementierte Lupenfunktion zum Einsatz kommen, die beispielsweise in einen Graphik-Controller integriert ist.

Bezüglich des Verfahrens wird die Erfindung mit den Schritten gelöst:
- Laden anzuzeigender Daten aus einem Datennetz,
- Erzeugen einer graphischen Darstellung der anzuzeigenden Daten und deren Speicherung in einem Graphikspeicher,
- Auswahl eines auszugebenden Ausschnitt und
- Ausgabe der dem ausgewählten Ausschnitt entsprechenden Daten aus dem Graphikspeicher.

Auch gemäß dem erfindungsgemäßen Verfahren wird zuerst eine graphische Darstellung der anzuzeigenden Daten erzeugt und danach der Ausschnitt bestimmt, der ausgegeben werden soll.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
Figur 1 ein Blockschaltbild eines ersten Ausführungsbeispiels eines erfindungsgemäßen Datennetzanschlußgeräts,
Figur 2 wie Figur 1, aber zweites Ausführungsbeispiel
Figur 3 ein Ablaufdiagramm des erfindungsgemäßen Verfahrens in einer weitergebildeten Ausgestaltung,
Figur 4 ein Ablaufdiagramm vom Laden einer Internetseite bis zu der Anzeige eines Seitenausschnitts auf einem Fernseher und
Figur 5 ein Ablaufdiagramm vom Aufruf einer Internetseite bis zum Anzeigen auf einem Fernseher gemäß dem Stand der Technik.

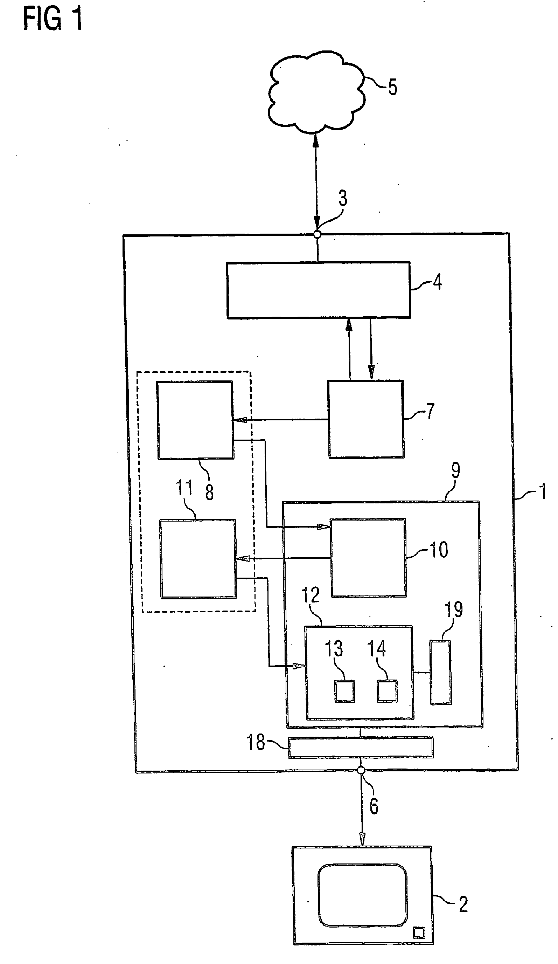

Die Figur 1 zeigt eine schematische Darstellung eines erfindungsgemäßen Datennetzanschlußgeräts 1. Dieses besitzt einen Eingang 3 und einen Ausgang 6. Der Eingang 3 des Datennetzanschlußgeräts 1 ist mit einem Datennetz, im dargestellten Fall mit dem Internet 5 verbunden. Innerhalb des Geräts ist der Eingang 3 mit einer Schnittstellenvorrichtung 4 verbunden. Diese ist dazu eingerichtet, die empfangenen digitalen Daten so umzusetzen, daß sie intern weiterverarbeitet werden können. Anders herum ist die Schnittstellenvorrichtung natürlich auch dazu eingerichtet, Daten an das Internet 5 zu senden. Die empfangenen Daten werden von einer Ladeeinrichtung 7 zunächst angefordert, wobei dies beispielsweise durch die Eingabe einer URL durch einen Benutzer oder durch das Anklicken eines Links erfolgt. Die Ladeeinrichtung 7 lädt sodann die angeforderten Daten, die beispielsweise durch eine HTML-Seite gegeben sind, in einen Speicher 8. Nachdem alle notwendigen Daten der Seite geladen sind, muß aus den empfangenen Daten ein Signal erzeugt werden, mit dem das am Ausgang 6 angeschlossene Anzeigegerät 2 angesteuert werden kann. Dazu ist eine Anzeigeeinrichtung 9 vorgesehen, die mit dem Speicher 8 verbunden ist. Die Daten aus dem Speicher 8 werden in eine Bilderzeugungseinrichtung 10 der Anzeigeeinrichtung 9 geladen. Dort wird eine graphische Darstellung der anzuzeigenden Daten berechnet und diese nachfolgend in einem Graphikspeicher 11 abgelegt.

Die Bilderzeugungseinrichtung 10 ist notwendig, da die geladenen Daten im Speicher 8 nicht in einer Form vorliegen, in der sie angezeigt werden können. Eine HTML-Seite besteht beispielsweise aus einer Vielzahl von Befehlen. Erst in einem sogenannten Browser oder im vorliegenden Fall in der Bilderzeugungseinrichtung 10 wird aus den Befehlen eine graphische Darstellung der HTML-Seite erzeugt. Dies kann in Abhängigkeit von Benutzereinstellungen geschehen, so kann beispielsweise die Schriftgröße oder die Farbgebung beeinflußt werden.

Darüber hinaus können auf Seiten des Empfängers der HTML-Seite graphische Elemente in die Seite integriert werden, die als separate Dateien übermittelt werden. Weiterhin können Zusatzprogramme, sogenannte Plug-Ins oder Active-X-Controls aufgerufen werden, die dazu eingerichtet sind, beispielsweise animierte Graphikelemente, Filme oder Ähnliches darzustellen. Diese Zusatzprogramme werden beispielsweise durch Programmbibliotheken in Microsoft Windows, sogenannte DLL-Dateien, bereitgestellt und müssen nicht mit der HTML-Seite aus dem Internet geladen werden. Lediglich die von den Zusatzprogrammen zu verarbeitenden Daten müssen heruntergeladen werden.

Erfindungsgemäß wird aus den Daten der gesamten anzuzeigenden Daten eine graphische Darstellung berechnet. Im Gegensatz hierzu arbeiten Internet-Browser aus dem Stand der Technik derart, daß sie die graphische Darstellung nur des Teils einer Seite berechnen, der auch auf dem Anzeigegerät dargestellt werden kann.

Die Anzeigeeinrichtung 9 umfaßt darüber hinaus eine Ausgabeeinrichtung 12 zur Ausgabe eines Ausschnitts der graphischen Darstellung, die in dem Graphikspeicher 11 abgelegt ist. Die Größe des Ausschnitts ist durch Voreinstellungen des Benutzers festlegbar und entspricht vorteilhafterweise der Auslösung seines Anzeigegeräts. Somit ist sichergestellt, daß nachfolgende Schaltungskomponenten nur die Datenmenge verarbeiten müssen, die auch dargestellt werden kann, d. h. für den Benutzer sichtbar ist. Auch kann beispielsweise beim Scrollen sichergestellt werden, daß sich der neue Bildschirminhalt unmittelbar an den alten anschließt.

Die Ausgabeeinrichtung 12 weist Mittel 13 auf zur Auswahl des auszugebenden Ausschnitts. Auf diese Weise ist ein horizontales und vertikales Scrollen über die gesamte Seite ermöglicht. Anschaulich beschrieben entspricht der auszugebende Ausschnitt einem Fenster vorbestimmter Größe, das über die im Graphikspeicher abgelegte graphische Darstellung der gesamten Seite bewegt wird und immer nur einen Ausschnitt sichtbar werden läßt. Bei einem Verschieben des Fensters muß nach der Erfindung keine Neuberechnung der graphischen Darstellung des darzustellenden Bildschirminhalts erfolgen, sondern die Daten können aus dem Graphikspeicher bereits in berechneter Form entnommen werden. Das Datennetzanschlußgerät 1 weist zu diesem Zweck eine Schnittstelle 18 auf, die die digitalen Signale aus der Ausgabeeinrichtung 12 in beispielsweise ein analoges Ausgangssignal zur Ansteuerung eines Fernsehers umwandelt. An dieser Stelle sind jedoch beliebige analoge oder digitale Schnittstellen denkbar, so daß auch Computermonitore, Videobeamer oder Aufzeichnungsgeräte angeschlossen werden können.

In einer vorteilhaften Ausgestaltung weist die Ausgabeeinrichtung 12 Mittel 14 zur vergrößerten Darstellung eines Teils eines ausgewählten Ausschnitts auf. Wenn auf einer Seite schlecht leserliche oder erkennbare Bereiche vorhanden sind, kann durch die Mittel 14 dieser Bereich vergrößert werden. Eine solche Funktion kann ohne größere Rechenbelastung dadurch realisiert werden, daß hardware-implementierte Funktionen eines Graphikchips eingesetzt werden, die aus dem durch die Mittel 13 ausgewählten Ausschnitt wiederum einen Teil auswählen und vergrößert zur Anzeige bringen.

Das Auswählen eines an den bisher dargestellten Ausschnitt angrenzenden Ausschnitts erfolgt dadurch, daß beim Bewegen eines Cursors an einen der Bildschirmränder ein Scrollen in diese Richtung erfolgt, das Fenster also in diese Richtung verschoben wird. Der verschobene Bereich kann der Bildschirmhöhe oder Bildschirmbreite oder einem Teil hiervon entsprechen.

Gleichzeitig zur Ausgabe ausgewählter Ausschnitte muß sichergestellt werden, daß ein Benutzer auch Eingaben vornehmen kann, beispielsweise Text eingeben oder insbesondere mit einem Cursor bestimmte Bereiche anklicken kann. Die Berechnung der Eingabekoordinaten muß also analog zu dem dargestellten Ausschnitt der auszugebenden Daten erfolgen. Eine Cursorsteuerung 19 ist deswegen mit der Ausgabeeinrichtung 12 gekoppelt. Dies betrifft jedoch nicht den Kern der Erfindung und ist deswegen nicht im Einzelnen erläutert.

In einer Weiterbildung der Erfindung ist eine weitere Funktion vorgesehen, die ein spezielles Problem berücksichtigt, das die Darstellung von Internetseiten auf einem Fernseher betrifft. Aufgrund der schlechteren Auflösung eines Fernsehers und der oftmals relativ großen Entfernung, die zwischen einem Benutzer und dem Bildschirm besteht, ist in einzelnen Fälle nicht gut erkennbar, wo sich das Feld befindet, in dem man eine Eingabe vornehmen möchte, oder welches ein aktiver Link ist, der durch den nächsten Tastendruck aktiviert werden könnte. Hier ist von Vorteil, daß die anzuzeigenden Daten im Graphikspeicher nicht nur als reines Pixelbild abgelegt sind, sondern durch ein Parsen der Seite auch einzelne Bildelemente, für die gerade geschriebene Funktion Linkelemente, erkennbar sind. Somit ist es möglich, einen gerade aktiven Link oder ein aktives Eingabefeld durch einen Fokusrahmen oder ein anderes Mittel zur Hervorhebung kenntlich zu machen.

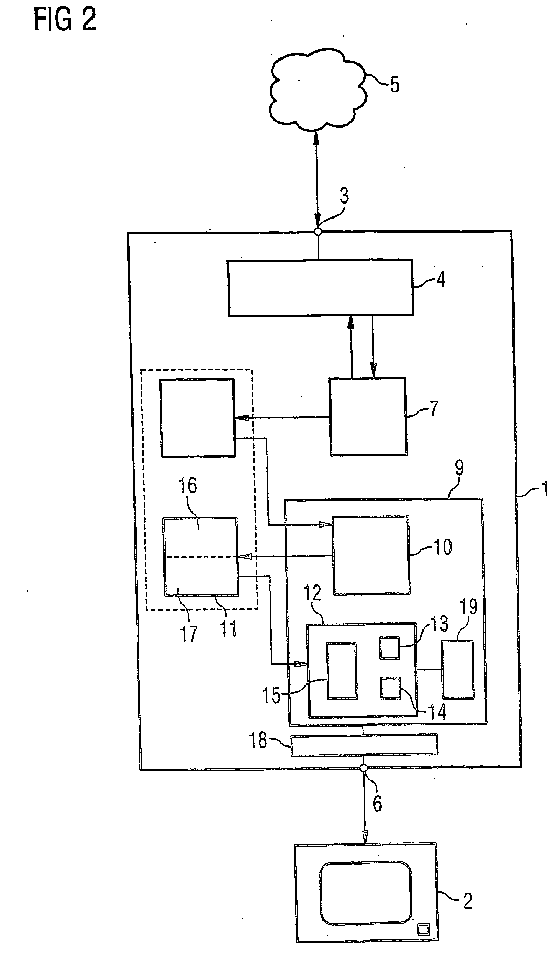

Die Figur 2 zeigt eine Weiterbildung des Datennetzanschlußgeräts von Figur 1. Bei diesem Ausführungsbeispiel besitzt der Graphikspeicher zwei oder mehr Ebenen 16 und 17. In der ersten Ebene 16 wird die graphische Darstellung sämtlicher HTML-Elemente abgelegt, die von der Bilderzeugungseinrichtung 10 erzeugt wurden. In der zweiten Ebene 17 werden bewegte Bilder gespeichert, die von einem Active-X-Control oder einem Plug-In erzeugt wurden. Der Vorteil besteht darin, daß nicht bei jeder Änderung des bewegten Bildes die gesamte HTML-Seite neu berechnet werden muß, obwohl sich dort nichts geändert hat. Nach einer Änderung auf der HTML-Seite ist es zwar erforderlich, diese neu zu berechnen, jedoch geschieht dies verhältnismäßig selten. In dem Zeitraum zwischen zwei Änderungen der HTML-Seite sind die Daten statisch, um sie abzugrenzen gegenüber Videofilmen oder anderen bewegten Elementen, die eine viel höhere Bildwiederholfrequenz haben.

Durch diese Aufteilung des Graphikspeichers 11 ist es also möglich, die unter Umständen sehr große HTML-Seite unverändert in der ersten Ebene 16 zu erhalten und nur den Speicher 17 ständig zu aktualisieren, wobei die bewegten Bilder meist nur einen sehr kleinen Bereich der gesamten anzuzeigenden Daten, die sich auf einer Seite befinden, betreffen.

Für die Anzeige, d. h. für die Ausgabe eines Ausgangssignals, ist es erforderlich, die in der ersten Ebene 16 und der zweiten Ebene 17 des Graphikspeichers 11 abgelegten Daten zu verbinden. Dazu besitzt die Ausgabeeinrichtung 12 eine Mischeinrichtung 15, die aus den Daten der beiden Speicherebenen eine gemeinsame graphische Darstellung erzeugt.

Je nachdem, wie der auszugebende Ausschnitt gewählt wurde, müssen durch die Mischeinrichtung nur Daten aus der ersten Speicherebene 16 berücksichtigt werden. Dies ist dann der Fall, wenn sich keine bewegten Bildelemente in dem ausgewählten Ausschnitt befinden. Wenn in dem gewählten Ausschnitt jedoch auch anzuzeigende Bildelemente zu zeigen sind, werden die graphischen Darstellungen der ersten Ebene 16 und der zweiten Ebene 17 derart übereinandergelegt, daß entweder die graphische Darstellung aus der zweiten Ebene 17 in den Vordergrund tritt oder transparent die graphische Darstellung der ersten Ebene 16 erkennbar ist.

In diesem Ausführungsbeispiel sind zwei Ebenen vorgesehen, es ist jedoch ebenfalls möglich, mehr als zwei Ebenen in dem Graphikspeicher 11 vorzusehen, die unterschiedliche Bestandteile der anzuzeigenden Daten jeweils in einer graphischen Darstellung beinhalten.

Die weitere Verarbeitung des Bildes, so auch die beschriebene Zoomfunktion, erfolgen wie beim Ausführungsbeispiel von Figur 1, da am Ausgang der Mischeinrichtung 15 nur noch eine zweidimensionale graphische Darstellung vorliegt.

Der Speicher 8 und der Graphikspeicher 11 mit seinen Ebenen 16 und 17 sind in der Darstellung von Figur 1 als separate Komponenten dargestellt. Selbstverständlich ist es möglich, diese Speicher in einer gemeinsamen Speicherkomponente zusammenzufassen. Je nach zur Verfügung stehender Hardware können die Speicher aber auch so aufgeteilt sein, daß sich der Speicher 8 in einem einem Prozessor zugeordneten RAM befindet und der Graphikspeicher 11 einem Graphik-Controller zugeordnet ist, der eine separate Funktionseinheit bildet.

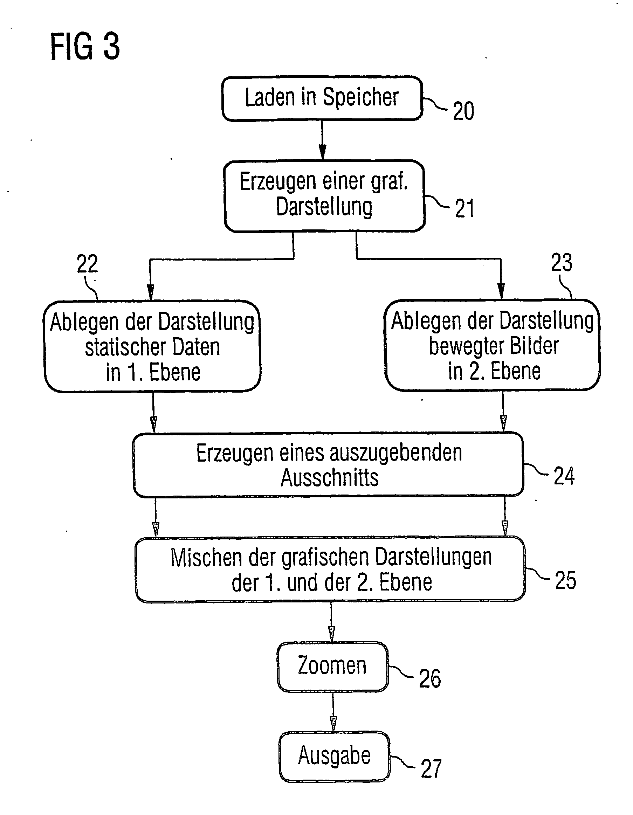

Die Figur 3 zeigt ein Ablaufdiagramm eines erfindungsgemäßen Verfahrens, das einen Überblick über die ablaufenden Verfahrensschritte bietet.

In einem ersten Schritt 20 werden Daten aus dem Internet in einen Speicher geladen. Anschließend wird aus den geladenen Daten in Schritt 21 eine graphische Darstellung erzeugt. Dies kann für verschiedene Elemente der anzuzeigenden Daten getrennt erfolgen, wobei im gezeigten Ausführungsbeispiel die graphische Darstellung statischer Daten, d. h. die sich nur verhältnismäßig selten ändern, in der ersten Ebene eines Graphikspeichers abgelegt wird (Schritt 22). Parallel dazu erfolgt der Schritt 23, in dem die graphische Darstellung bewegter Bilder in der zweiten Ebene des Graphikspeichers abgelegt wird.

Anschließend wird in einem Schritt 24 ein "Fenster" über die erste und zweite Ebene des Graphikspeichers gelegt. Die Fenster werden immer parallel bewegt, so daß sich in beiden Ebenen der gleiche Ausschnitt ergibt. Nach der Auswahl des auszugebenden Ausschnitts werden in einem Schritt 25 die graphischen Darstellungen der ersten und der zweiten Ebene gemischt, so daß sich eine zweidimensionale graphische Darstellung ergibt, die Daten sowohl aus der ersten als auch aus der zweiten.Ebene des Graphikspeichers beinhaltet.

In einem anschließenden optionalen Schritt 26 wird ein Teil des ausgewählten Bildausschnitts vergrößert dargestellt, was auch mit "Zoomen" bezeichnet wird. Abschließend werden die gemischten Daten bzw. die gemischten und gezoomten Daten entsprechend der graphischen Darstellung ausgegeben, wofür die Ausgabeschnittstelle 18 eingesetzt wird.

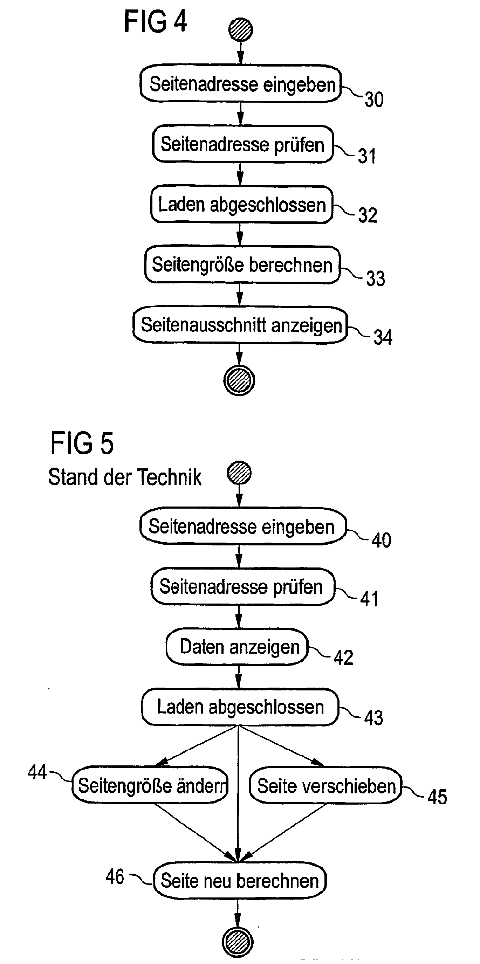

Anhand der Figuren 4 und 5 wird gegenübergestellt, wie sich das erfindungsgemäße Verfahren von dem Verfahren nach dem Stand der Technik unterscheidet. Dabei wird zunächst auf die Figur 5 eingegangen, die das Verfahren gemäß dem Stand der Technik beschreibt. Das Verfahren beginnt, indem ein Benutzer eine URL, d. h. die Adresse einer anzuzeigenden Seite aus dem Internet, eingibt. Anschließend wird, gemäß dem hier beschriebenen Verfahren, das ein Standard-Browser anwendet, geprüft, ob die URL verfügbar ist. In einem Schritt 42 werden die jeweils geladenen Daten angezeigt, wobei die Anzeige in kurzen Zeitabständen aktualisiert wird, um die neu geladenen Daten zusätzlich zur Anzeige zu bringen.

In einem Schritt 43 wird festgestellt, daß die Seite fertig geladen ist. Danach bestehen in Schritten 44 und 45 für einen Benutzer die Möglichkeiten, die Seitengröße zu ändern, oder in einem Schritt 45 die Seite zu verschieben. Abschließend wird in einem Schritt 46 in Abhängigkeit von Benutzeraktionen in den Schritten 44 bzw. 45 die anzuzeigende Seite neu berechnet und ausgegeben.

Die Figur 4 zeigt im Gegensatz dazu das erfindungsgemäße Verfahren. Dies startet ebenso wie das bekannte Verfahren gemäß Figur 5 in einem Schritt 30 damit, daß ein Benutzer eine URL eingibt und in einem Schritt 31 überprüft wird, ob die URL verfügbar ist. In einem Schritt 32 wird festgestellt, ob die Seite fertig geladen ist. Bis dahin wird keine graphische Darstellung der geladenen Daten erzeugt und angezeigt, anders also als beim Verfahren nach dem Stand der Technik, demgemäß in kurzen Zeitabständen eine graphische Darstellung erzeugt und angezeigt wird.

Anschließend wird in einem Schritt 33 die anzuzeigende Seitengröße berechnet, was von den Voreinstellungen des Benutzers abhängt. In einem nicht dargestellten Zwischenschritt wird zuvor die graphische Darstellung der gesamten Seite berechnet, wie anhand der Figuren 1 und 2 erläutert wurde.

Nach der Berechnung der Seitengröße im Schritt 33 wird der ausgewählte Ausschnitt in einem Schritt 34 ausgegeben, so daß der Ausschnitt von einem Anzeigegerät dargestellt werden kann.

### Bezugszeichenliste

- 1: Datennetzanschlußgerät
- 2: Anzeigegerät
- 3: Eingang
- 4: Eingangsschnittstelle
- 5: Datennetz
- 6: Ausgang
- 7: Ladeeinrichtung
- 8: Speicher
- 9: Anzeigeeinrichtung
- 10: Bilderzeugungseinrichtung
- 11: Graphikspeicher
- 12: Ausgabeeinrichtung
- 13: Auswahlmittel
- 14: Zoom-Mittel
- 15: Mischeinrichtung
- 16: erste Speicherebene
- 17: zweite Speicherebene
- 18: Ausgangsschnittstelle
- 20 bis 27: Verfahrensschritte
- 30 bis 34: Verfahrensschritte
- 40 bis 46: Verfahrensschritte

## Patentansprüche

1. Datennetzanschlußgerät (1) für ein Anzeigegerät (2) mit
- einer einen Eingang (3) aufweisenden Schnittstellenvorrichtung (4) zur Herstellung einer Kommunikationsverbindung mit einem Datennetz (5),
- einem Ausgang (6) zum Anschluß des Anzeigegeräts (2),
- einer Ladeeinrichtung (7) zum Laden einer HTML-Seite aus dem Datennetz (5) in einen Speicher (8) und
- einer Anzeigeeinrichtung (9) zur Umwandlung der geladenen HTML-Seite in ein Ausgangssignal zur Ansteuerung des Anzeigegeräts (2),
**dadurch gekennzeichnet, daß** die Anzeigeeinrichtung (9)
- eine Bilderzeugungseinrichtung (10) aufweist zur Erzeugung einer graphischen Darstellung der gesamten anzuzeigenden HTML-Seite und zum Ablegen der graphischen Darstellung in einem Graphikspeicher (11) und
- eine Ausgabeeinrichtung (12) aufweist zur Ausgabe eines Ausschnitts der graphischen Darstellung aus dem Graphikspeicher (11), die Mittel (13) umfaßt zur Auswahl des auszugebenden Ausschnitts.

2. Datennetzanschlußgerät nach Anspruch 1,
**dadurch gekennzeichnet, daß**
die Ausgabeeinrichtung (12) Mittel (14) umfaßt zur vergrößerten Darstellung eines Teils eines ausgewählten Ausschnitts.

3. Datennetzanschlußgerät nach Anspruch 1 oder 2,
**dadurch gekennzeichnet, daß**
die Größe des auszugebenden Ausschnitts durch einen Benutzer voreinstellbar ist.

4. Datennetzanschlußgerät nach einem der Ansprüche 1 bis 3,
**dadurch gekennzeichnet, daß**
der Graphikspeicher (11) mindestens zwei Ebenen umfaßt, wobei eine erste Ebene (16) zur Speicherung einer graphischen Darstellung statischer Daten vorgesehen ist und eine zweite Ebene (17) zur Speicherung einer graphischen Darstellung bewegter Bilder vorgesehen ist.

5. Datennetzanschlußgerät nach Anspruch 4,
**dadurch gekennzeichnet, daß**
die Ausgabeeinrichtung eine Mischeinrichtung (15) umfaßt, die aus den graphischen Darstellungen der ersten und der zweiten Ebene (16, 17) eine gemeinsame graphische Darstellung erzeugt.

6. Datennetzanschlußgerät nach einem der Ansprüche 1 bis 5,
**dadurch gekennzeichnet, daß**
die Bilderzeugungseinrichtung (10) dazu eingerichtet ist, bei der Erzeugung der graphischen Darstellung der anzuzeigenden Daten darin enthaltene aktive Links oder Eingabefelder mit einer Kennzeichnung zu versehen.

7. Verfahren zur Aufbereitung von aus einem Datennetz geladenen Daten mit den Schritten:
- Laden einer anzuzeigenden HTML-Seite aus einem Datennetz,
- Erzeugen einer graphischen Darstellung der gesamten anzuzeigenden HTML-Seite und deren Speicherung in einem Graphikspeicher (11),
- Auswahl eines auszugebenden Ausschnitts und
- Auslesen und Anzeigen eines dem ausgewählten Ausschnitt entsprechenden Speicherbereichs aus dem Graphikspeicher (11).

8. Verfahren nach Anspruch 7,
**dadurch gekennzeichnet, daß**
die Größe eines auszugebenden Ausschnitts durch eine Vorbestimmung eines Benutzers festgelegt ist.

9. Verfahren nach Anspruch 7 oder 8,
**dadurch gekennzeichnet, daß**
in einem zusätzlichen, durch einen Benutzer auslösbaren Schritt ein Teil eines ausgewählten Ausschnitts vergrößert wird.

## Claims

1. Data-network connection device (1) for a display device (2), having
- an interface device (4) that comprises an input (3) and is used for establishing a communications link to a data network (5),
- an output (6) for connecting the display device (2),
- a downloading device (7) for downloading an HTML page from the data network (5) into a memory (8), and
- a display unit (9) for converting the downloaded HTML page into an output signal for driving the display device (2),
**characterized in that** the display unit (9)
- has an image generation device (10) for generating a graphics image of the entire HTML page to be displayed and for saving the graphics image in a graphics memory (11), and
- has an output device (12) for outputting a segment of the graphics image from the graphics memory (11), said output device comprising means (13) for selecting the segment to be output.

2. Data-network connection device according to Claim 1,
**characterized in that**
the output device (12) comprises means (14) for displaying a section of a selected segment in magnified form.

3. Data-network connection device according to Claim 1 or 2,
**characterized in that**
the size of the segment to be output can be preset by a user.

4. Data-network connection device according to one of Claims 1 to 3,
**characterized in that**
the graphics memory (11) comprises at least two levels, where a first level (16) is provided for storing a graphics image of static data, and a second level (17) is provided for storing a graphics image of moving images.

5. Data-network connection device according to Claim 4,
**characterized in that**
the output device comprises a mixing device (15) which generates a common graphics image from the graphics images of the first and the second level (16, 17).

6. Data-network connection device according to one of Claims 1 to 5,
**characterized in that**
the image generation device (10) is configured so that, in the process of generating the graphics image of the data to be displayed, it provides an identifier for active links or input fields contained in this data.

7. Method for processing data downloaded from a data network, having the steps:
- Downloading an HTML page to be displayed from a data network,
- Generating a graphics image of the entire HTML page to be displayed and saving it in a graphics memory (11),
- Selecting a segment to be output, and
- Reading and displaying from the graphics memory (11) a memory area that corresponds to the selected segment.

8. Method according to Claim 7,
**characterized in that**
the size of a segment to be output is preset by a user.

9. Method according to Claim 7 or 8,
**characterized in that**
in an additional step that can be initiated by a user, a section of a selected segment is magnified.

## Revendications

1. Appareil de raccordement de réseau de données (1) pour un appareil d'affichage (2) comprenant
- un dispositif d'interface (4) présentant une entrée (3) pour l'établissement d'une liaison de communication avec un réseau de données (5),
- une sortie (6) pour le raccordement de l'appareil d'affichage (2),
- un dispositif de chargement (7) pour le chargement d'une page HTML à partir du réseau de données (5) dans une mémoire (8) et
- un dispositif d'affichage (9) pour la conversion de la page HTML chargée en un signal de sortie pour l'activation de l'appareil d'affichage (2),
**caractérisé en ce que** le dispositif d'affichage (9)
- présente un dispositif de génération d'image (10) pour la génération d'une représentation graphique de l'ensemble de la page HTML à afficher et pour la dépose de la représentation graphique dans une mémoire de graphique (11) et
- un dispositif d'édition (12) pour l'édition d'un extrait de la représentation graphique de la mémoire de graphique (11), qui comporte des moyens (13) pour la sélection de l'extrait à éditer.

2. Appareil de raccordement de réseau de données selon la revendication 1,
**caractérisé en ce que**
le dispositif d'édition (12) comporte des moyens (14) pour la représentation agrandie d'une partie d'un extrait sélectionné.

3. Appareil de raccordement de réseau de données selon la revendication 1 ou 2,
**caractérisé en ce que**
la grandeur de l'extrait à éditer peut être préréglée par un utilisateur.

4. Appareil de raccordement de réseau de données selon l'une quelconque des revendications 1 à 3,
**caractérisé en ce que** la mémoire de graphique (11) comporte au moins deux niveaux, un premier niveau (16) étant prévu pour le stockage d'une représentation graphique de données statiques et un second niveau (17) étant prévu pour le stockage d'une représentation graphique d'images déplacées.

5. Appareil de raccordement de réseau de données selon la revendication 4,
**caractérisé en ce que**
le dispositif d'édition comporte un dispositif de mélange (15) qui génère une représentation graphique commune à partir des représentations graphiques du premier et du second niveaux (16, 17).

6. Appareil de raccordement de réseau de données selon l'une quelconque des revendications 1 à 5,
**caractérisé en ce que**
le dispositif de génération d'image (10) est aménagé pour doter, lors de la génération de la représentation graphique des données à afficher, des liens ou des champs d'entrée actifs contenus dans ces données d'un marquage.

7. Procédé pour le traitement de données chargées à partir d'un réseau de données comprenant les étapes suivantes:
- chargement d'une page HTML à afficher à partir d'un réseau de données,
- génération d'une représentation graphique de l'ensemble de la page HTML à afficher et son stockage dans une mémoire de graphique (11),
- sélection d'un extrait à éditer et
- lecture et affichage d'une zone de mémoire, correspondant à l'extrait sélectionné, provenant de la mémoire de graphique (11).

8. Procédé selon la revendication 7,
**caractérisé en ce que**
la grandeur d'un extrait à éditer est fixée par une prédétermination d'un utilisateur.

9. Procédé selon la revendication 7 ou 8,
**caractérisé en ce que**
une partie d'un extrait sélectionné est agrandie dans une étape supplémentaire, pouvant être déclenchée par un utilisateur.
